(19) **Europäisches Patentamt**
**European Patent Office**
**Office européen des brevets**

(11) **EP 1 867 746 B1**

(12) **EUROPEAN PATENT SPECIFICATION**

(45) Date of publication and mention
of the grant of the patent:
**03.05.2017 Bulletin 2017/18**

(51) Int Cl.:
*C22C 38/00* (2006.01)  *C22C 38/02* (2006.01)
*C22C 38/04* (2006.01)  *C22C 38/06* (2006.01)
*C22C 38/14* (2006.01)  *C22C 38/38* (2006.01)
*C22C 38/12* (2006.01)  *B32B 15/01* (2006.01)
*C23C 2/02* (2006.01)  *C23C 2/28* (2006.01)
*C21D 9/46* (2006.01)

(21) Application number: **06731344.5**

(22) Date of filing: **31.03.2006**

(86) International application number:
**PCT/JP2006/307396**

(87) International publication number:
**WO 2006/104275 (05.10.2006 Gazette 2006/40)**

(54) **METHOD OF PRODUCING ALLOYED HOT-DIP GALVANIZED STEEL SHEET**

VERFAHREN ZUR HERSTELLUNG EINES LEGIERTEN FEUERVERZINKTEN STAHLBLECHES

PROCÉDÉ DE PRODUCTION D'UNE TÔLE D'ACIER GALVANISÉE ALLIÉE PAR IMMERSION À CHAUD

(84) Designated Contracting States:
**DE FR GB**

(30) Priority: **31.03.2005 JP 2005103833**
**03.03.2006 JP 2006058460**

(43) Date of publication of application:
**19.12.2007 Bulletin 2007/51**

(73) Proprietor: **JFE Steel Corporation**
**Tokyo, 100-0011 (JP)**

(72) Inventors:
• **FUTATSUKA, Takayuki**
**Tokyo 100-0011 (JP)**
• **NAKAGAITO, Tatsuya**
**Tokyo 100-0011 (JP)**
• **MATSUDA, Hiroshi**
**Tokyo 100-0011 (JP)**

• **NAGATAKI, Yasunobu**
**Tokyo 100-0011 (JP)**
• **AWAJIYA, Yutaka**
**Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
**JP-A- H05 247 586    JP-A- H06 145 788**
**JP-A- H11 131 145    JP-A- H11 236 621**
**JP-A- 2000 345 288   JP-A- 2001 303 226**
**JP-A- 2002 038 248   JP-A- 2002 038 248**
**JP-A- 2002 047 535   JP-A- 2002 047 535**
**JP-A- 2003 049 239   JP-A- 2003 105 486**
**JP-A- 2003 105 491   JP-A- 2003 105 491**
**JP-A- 2004 115 843   JP-A- 2004 115 843**

EP 1 867 746 B1

**Description**

Technical Field

The present invention relates to a method of producing an alloyed hot-dip galvanized steel sheet having high strength, excellent surface appearance, and excellent anti-secondary work embrittlement. The alloyed hot-dip galvanized steel sheet is suitably applied to automobile steel sheets.

Background Art

In recent years, from the viewpoint of conservation of the global environment, there have been advanced thinning of steel sheets by weight reduction of car bodies for improving mileages and increases in high strength steel sheets for improving safety. However, increases in strength of steel sheets decrease ductility and toughness, and thus there have been desired steel sheets having both high strength and high formability and excellent toughness after forming (anti-secondary work embrittlement).

For such a requirement, there have been developed various steel sheets such as ferrite-martensite dual phase steel (so-called Dual-Phase steel) and steel using transformation-induced plasticity of residual austenite (so-called TRIP steel).

In some cases, the surfaces of these steel sheets are galvanized for improving rust prevention in practical use. As such galvanized steel sheets, alloyed hot-dip galvanized steel sheets subjected to heat treatment for diffusing Fe of the steel sheets into plating layers after hot-dip galvanization are widely used from the viewpoint of securing press property, spot weldability, coating adhesion.

For example, in Japanese Unexamined Patent Application Publication No. 11-279691, there has been proposed an alloyed hot-dip galvanized steel sheet in which residual austenite (also referred to as "residual $\gamma$") is secured by adding a large amount of Si to the steel sheet, thereby achieving high ductility. However, Si decreases the adhesion of zinc plating, and thus a complicated process of Ni pre-plating, applying a special chemical, reducing an oxide layer on the surface of a steel sheet, and/or appropriately controlling the thickness of an oxide layer is required for adhesion of zinc plating to such high-Si steel.

In Japanese Unexamined Patent Application Publication No. 2002-030403, there has been proposed an alloyed hot-dip galvanized steel sheet in which instead of Si, Al with a small adverse effect on zinc plating adhesion is added to the steel sheet, thereby securing excellent ductility and improving wettability and anti-powdering qualities of zinc plating. However, in high-Al steel; N and Al in the steel forms AlN which precipitates in large amounts at austenite grain boundaries during continuous casting, thereby embrittling the grain boundaries. Since bending correction from the vertical direction to the horizontal direction is performed in usual continuous casting, the embrittlement of the grain boundaries easily causes cracking in a slab at a corrected portion. When a slab having a crack is rolled, the crack remains in a final product to significantly deteriorate the surface appearance. In this case, a process of removing the crack of the slab with a grinder is required, thereby significantly increasing cost.

In Patent No. 3596316, there has been proposed a method of avoiding slab cracking in which Ti is added to a steel sheet to fix N as TiN in order to avoid the slab cracking. However, precipitation of AlN actually starts at a temperature higher than the temperature where N is completely fixed as TiN, and thus it is difficult to completely avoid the slab cracking. Further, Al is a strong ferrite stabilizing element and increases the $A_3$ transformation point, and thus ferrite is easily produced, due to an increase in the transformation point, at a slab corner where a temperature drop easily occurs until the slab width is reduced after the slab is discharged from a heating furnace during hot rolling. As a result, local distortion is concentrated at a corner during width reduction, thereby easily causing surface defects such as scabs.

Any one of the proposed techniques has the problem of high surface sliding resistance and low anti-secondary work embrittlement in comparison to cold-rolled steel sheets because the high-tension steel sheets are hot-dip galvanized in a subsequent process.

On the other hand, in Japanese Unexamined Patent Application Publication No. 2004-211140, there has been proposed a hot-dip galvanized steel sheet in which in order to improve the anti-secondary work embrittlement of a galvanized steel sheet, the amount of B added to a Dual-Phase steel sheet used as a steel sheet is controlled to decrease the grain size of ferrite grains, improving grain boundary strength. However, a steel sheet utilizing a martensite phase cannot utilize an improvement in ductility (TRIP effect) due to strain-induced transformation of residual austenite and thus does not have sufficient ductility.

JP 2002 047535 A describes an alloyed hot-dip galvanized steel sheet which is prepared by using a steel sheet containing a residual austenite phase in a volume % of 1 % or more. The steel sheet fulfills the following conditions:

$$Si\ (wt\text{-}\%) + Al\ (wt\text{-}\%) \geq 0.5;$$

and

$$Ts\ (tensile\ strength\ in\ MPa) \times El\ (elongation\ in\ \%) \geq 20,000.$$

The process for preparing the steel sheet does not necessarily satisfy the temperature holding steps at 730 - 900°C for 60 to 300 seconds and at 350 - 600°C for 30 to 250 seconds as defined in the present invention.

JP 2000 345288 A relates to a hot-dip galvanized steel sheet which is prepared by using a steel sheet containing steel microstructures of ferrite and martensite including a residual austenite. The process for preparing the steel sheet does not include the temperature holding step at 350 - 600°C for 30 to 250 seconds as defined in the present invention.

JP 2003 049239 A relates to a hot-dip galvanized steel sheet containing a composition which satisfies the following condition:

$$3 - (X + Y/10 + Z/3) - 12.5 \times (A - B) \geq 0$$

wherein X (wt-%) is Si content in the steel, Y (wt-%) is Mn content in the steel, Z (wt-%) is Al content in the steel, A (wt-%) is Al content in the plated layer and B (wt-%) is Mn content in the plated layer. The process for preparing the steel sheet does not include the temperature holding step at 350 - 600°C for 30 to 250 seconds as defined in the present invention.

JP 2003 105491 A describes a hot-dip galvanized steel sheet which is prepared by using a steel sheet containing steel microstructures of ferrite, 5 % or more of residual austenite and bainite. The process for preparing the steel sheet does not include the temperature holding step at 350 - 600°C for 30 to 250 seconds as defined in the present invention. JP 2004 115843 A relates to an alloyed hot-dip galvanized steel sheet which is prepared by using a steel sheet containing 3 - 50 vol-% of martensite and a composition which satisfies the following condition:

$$2 \leq Si\ (wt\text{-}\%) + Al\ (wt\text{-}\%) + Mn\ (wt\text{-}\%) \leq 4$$

The process for preparing the steel sheet does not necessarily satisfy the temperature holding step at 730 - 900°C for 60 to 300 seconds as defined in the present invention. JP 2002 038248 A describes an alloyed hot-dip galvanized steel sheet which is prepared by using a steel sheet containing a composition which satisfies, inter alia, Si + Al = 1.0 - 2.5 wt-%. The process for preparing the steel sheet does not necessarily satisfy the temperature holding step at 350 - 600°C for 30 to 250 seconds as defined in the present invention.

JP H11 131145 A relates to an alloyed hot-dip galvanized steel sheet which is prepared by using a steel sheet containing 3 vol-% or more of residual austenite and a composition which satisfies, *inter alia,* Si + Al = 1.0 - 3.0 wt-%. The process for preparing the steel sheet does not necessarily satisfy the temperature holding step at 730 - 900°C for 60 to 300 seconds as defined in the present invention.

JP 2003 105486 describes a hot-dip galvanized steel sheet which is prepared by using a steel sheet containing steel microstructures of ferrite, 7 % or more of residual austenite and bainite. The process for preparing the steel sheet does not include the temperature holding step at 350 - 600°C for 30 to 250 seconds as defined in the present invention.

JP 2001 303226 A relates to an alloyed hot-dip galvanized steel sheet which is prepared by using a steel sheet containing steel microstructures of ferrite and 1.0 30 vol-% of austenite and a composition which satisfies, *inter alia,* Si + Al ≧ 0.50 wt-% and 5{Ti (wt-%) + 2Nb (wt-%)} ≧ P (wt-%) + 0.1Si (wt-%). The process for preparing the steel sheet does not necessarily satisfy the temperature holding step at 730 - 900°C for 60 to 300 seconds as defined in the present invention.

JP H05 247586 A describes a hot-dip galvanized steel sheet which is prepared by using a steel sheet containing residual austenite. The process for preparing the steel sheet does not include the temperature holding step at 350 - 600°C for 30 to 250 seconds as defined in the present invention. JP H06 145788 relates to a method for producing a high strength steel sheet containing 3 - 20 vol.-% residual austenite, in which the composition of the steel sheet satisfies the following condition:

$$0.6Si(\%) \le Al(\%) \le 3 - 12.5C(\%).$$

The method includes a annealing step at a temperature of 650 - 900°C in the two phase coexisting temperature region for 10 sec - 3 min, a cooling step to a temperature of 350 - 600°C at a cooling rate of 4 - 200°C/s, a temperature holding step in this temperature range for 5 sec - 10 min, and a cooling step to a temperature of $\le$ 250°C at a cooling rate of $\ge$ 5°C/s.

JPH11236621 A relates to method for producing a high tensile strength and high ductility hot dip galvanized or galvanized steel sheet excellent in plating adhesion even in the case of using any of a hot rolled steel plate and a cold rolled steel sheet as a base material, according to which a cold rolled steel is preoxidized at 550 to 750 °C, is annealed at a two phase region temperature of 760 to 900 °C for $\ge$ 5 sec, is cooled to a temperature region of 420 to 600 °C at a cooling rate of $\ge$ 3 °C/s, is held in the same temperature region for $\ge$ 20 sec and is thereafter plated in a hot dip zinc bath to obtain a hot dip galvanized steel plate. Alloying treatment may be executed at $\le$ 600 °C.

The present invention has been achieved in consideration of the above-mentioned situation, and an object of the invention is to provide a method of producing an alloyed hot-dip galvanized steel sheet having high strength and excellent surface appearance and excellent anti-secondary work embrittlement.

Disclosure of Invention

The present invention provides a method of producing an alloyed hot-dip galvanized steel sheet, the method comprising casting, hot-rolling, and cold-rolling steel for a steel sheet, holding the steel sheet in a continuous galvanizing line at 730°C to 900°C for 60 to 300 seconds, cooling the steel sheet at 3 to 100°C/s, further holding the steel sheet at 350°C to 600°C for 30 to 250 seconds, hot-dip galvanizing the steel sheet, and then alloying the steel sheet at 470°C to 600°C, wherein the steel sheet has a composition consisting of 0.05 to 0.25 wt% of C, 0.01 to 0.5 wt% of Si, 1 to 3 wt% of Mn, 0.001 to 0.1 wt% of P, 0.0001 to 0.01 wt% of S, 0.1 to 2 wt% of Al, less than 0.005 wt% of N, and optionally at least one element selected from the group consisting of 1 wt% or less of Cr, 1 wt% or less of V, and 1 wt% or less of Mo; optionally at least one element selected from the group consisting of 0.1 wt% or less of Ti, 0.1 wt% or less.of Nb, 0.005 wt% or less of B, and 1 wt% or less of Ni; and optionally at least one element selected from the group consisting of Ca and REM in a total of 0.01 wt% or less, and satisfying the relations, Si + Al $\ge$ 0.6 wt%,

$$(0.0006 \times Al) \ wt\% \le N \le (0.0058 - 0.0026 \times Al) \ wt\%,$$

and Al $\le$ (1.25 $\times$ C$^{0.5}$ - 0.57 $\times$ Si + 0.625 $\times$ Mn) wt%, the balance being Fe and inevitable impurities, and wherein the steel sheet has a metal structure containing a residual austenite phase at a volume ratio of 3 to 20 %.

The composition may contain at least one element selected from the group consisting of 0.01 to 1 wt% of Cr, 0.01 to 1 wt% or less of V, and 0.01 to 1 wt% of Mo.

Each of the composition described above may further contain at least one element selected from the group consisting of 0.01 to 0.1 wt% of Ti, 0.01 to 0.1 wt% of Nb, 0.0001 to 0.005 wt% of B, and 0.01 to 1 wt% of Ni.

Each of the composition described above may further contain at least one element selected from the group consisting of Ca and REM in a total of 0.001 to 0.01 wt%.

Best Mode for Carrying Out the Invention

In order to obtain an alloyed hot-dip galvanized steel sheet having excellent surface appearance, excellent anti-secondary work embrittlement, and high strength, the inventors repeated intensive research from the viewpoint of the composition and microstructure of the steel sheet. As a result, it was found that precipitation and coarsening of AlN influence not only the surface quality of a final product due to slab cracking but also the anti-secondary work embrittlement of a final product, and the anti-secondary work embrittlement is improved when an N amount is N $\le$ (0.0058 - 0.0026 $\times$ Al) wt%. Although details of reasons are not necessarily known, a conceivable reason is that breakage starts from coarse AlN due to embrittlement at a low temperature, and when the Al amount is increased, precipitation of AlN starts from a high temperature to easily coarsen the precipitate, thereby deteriorating the anti-secondary work embrittlement.

On the other hand, fine AlN precipitating at a high temperature suppresses coarsening of austenite grains, and thus ferrite grains are made fine, thereby improving the anti-secondary work embrittlement. Therefore, it was found that there is a required minimum N amount, and a suitable N amount satisfies (0.0006 $\times$ Al) wt% $\le$ N for improving the anti-secondary work embrittlement.

It was also found that the occurrence of scabs in hot rolling is suppressed by controlling the Al amount to Al $\le$

$(1.25 \times C^{0.5} - 0.57 \times Si + 0.625 \times Mn)$ wt%. This is adapted for balancing an increase in the $Ar_3$ transformation point due to addition of Al and Si and a decrease in the transformation point due to addition of C and Mn. The reason for this is that when the components are controlled in the above range, ferrite formation at a corner of a slab before width reduction is suppressed.

According to the present invention, therefore, slab cracking in continuous casting, scabs in hot rolling, and non-plating after hot-dip galvanization are suppressed to improve the surface appearance of products. In addition, the anti-secondary work embrittlement is improved. Further, in the present invention, an alloyed hot-dip galvanized steel sheet with high strength can be obtained without passing through a complicated process.

The present invention will be described in detail below.

First, the reasons for limiting the composition of the alloyed hot-dip galvanized steel sheet will be described. Hereinafter, "%" represents "% by mass".

C: 0.05 to 0.25%

C is an element for stabilizing austenite and a necessary element for securing a martensite amount and causing austenite to remain at room temperature. When the C amount is less than 0.05%, it is difficult to simultaneously secure the strength of the steel sheet and the amount of residual austenite to achieve high ductility. On the other hand, when the C amount exceeds 0.25%, welds and heat-affected zone are significantly hardened, thereby deteriorating weldability. Therefore, the C amount is in the range of 0.05 to 0.25%.

Si: 0.01 to 0.5%

Si is an element effective in strengthening steel. Si is also a ferrite forming element which promotes the concentration of C in austenite and suppresses the formation of a carbide and thus has the function to promote the formation of residual austenite. However, when the Si amount exceeds 0.5%, galvanizing is deteriorated, and plating is difficult in a usual hot-dip galvanization process. Therefore, the Si amount is 0.5% or less. The Si amount is about 0.01 to 0.5% and preferably 0.01 to 0.4%.

Mn: 1 to 3%

Mn is an element effective in strengthening steel. Mn is also an element for stabilizing austenite and an element necessary for increasing residual austenite. However, when the Mn amount is less than 1%, these effects cannot be easily obtained. On the other hand, when the Mn amount exceeds 3%, a second phase fraction is excessively increased, and the amount of solid-solution hardening is increased, thereby significantly increasing strength and greatly decreasing ductility. Therefore, such a Mn amount is unsuitable for application to automobile steel sheets. Thus, the Mn amount is in the range of 1 to 3%.

P: 0.001 to 0.1%

P is an element effective in strengthening steel. However, when the P amount exceeds 0.1%, plating defects or non-plating occurs, and P segregates at grain boundaries to deteriorate the anti-secondary work embrittlement. Therefore, the P amount is 0.1% or less. From the viewpoint of anti-secondary work embrittlement, the P amount is preferably 0.05% or less. The P amount is 0,001 to 0,1%, preferably 0.001 to 0.05%.

S: 0.0001 to 0.01%

S forms an inclusion such as MnS and causes deterioration in impact resistance and cracking along a metal flow of welds. Therefore, the S amount is preferably as small as possible. However, from the viewpoint of production cost, the S amount is 0.01% or less. The S amount is 0.0001 to 0.01%.

Al: 0.1 to 2%

$$Si + Al \geq 0.6\%$$

Al and Si are ferrite forming elements which promote the concentration of C in austenite and suppress the formation of a carbide and thus have the function to promote the formation of residual austenite. When a total of Al and Si added is less than 0.6%, sufficient ferrite or residual $\gamma$ cannot be obtained, thereby significantly decreasing ductility. Even when Al is added in an amount of less than 0.1% and Si is added up to an upper limit, the total of Al + Si is less than 0.6%. On the other hand, when the Al amount exceeds 2%, the amount of the inclusion in the steel sheet is increased, deteriorating ductility. Therefore, the Al amount is in the range of 0.1 to 2%, and Si + Al $\geq$ 0.6% is satisfied.

$$Al \leq (1.25 \times C^{0.5} - 0.57 \times Si + 0.625 \times Mn)\%$$

When the Al content exceeds $(1.25 \times C^{0.5} - 0.57 \times Si + 0.625 \times Mn)\%$, scabs easily occur in hot rolling. Therefore, the Al amount satisfies $Al \leq (1.25 \times C^{0.5} - 0.57 \times Si + 0.625 \times Mn)\%$.

N: less than 0.005%

$$(0.0006 \times Al) \% \leq N \leq (0.0058 - 0.0026 \times Al)\%$$

N is an important element in the present invention and causes deterioration in the anti-secondary work embrittlement when the amount of AlN precipitate is increased with an increase in the N amount. In order to avoid such deterioration in the anti-secondary work embrittlement, the N amount is limited to less than 0.005%, and the relational expression, $(0.0006 \times Al) \leq N \leq (0.0058 - 0.0026 \times Al)\%$, is satisfied. When the N amount is 0.00.5% or more, AlN excessively precipitates, causing cracking in a slab. Therefore, the N amount is less than 0.005%. Usually, the N amount is preferably 0.001 to less than 0.005%.

Cr, V, Mo: each 1% or less

Cr, V, and Mo have the function to suppress the formation of pearlite in cooling from an annealing temperature and thus can be added according to demand. When the amount of each of these elements is 1% or less, appropriate steel sheet strength is obtained, and ductility and adhesion of zinc plating are little adversely affected. Therefore, when Cr, V, and Mo are added, the amount of each of the elements is 1% or less. In general, the amount of each of the elements is preferably 0.01 to 1% and more preferably 0.01 to 0.5%.

Ti, Nb: each 0.1% or less

Ti and Nb are effective in precipitation strengthening of steel and can thus be added according to demand. However, when the amount of each of Ti and Nb is 0.1% or less, formability and shape fixability can be easily maintained. Therefore, when Ti and Nb are added, the amount of each of the elements is 0.1% or less. In general, the amount of each of the elements is preferably 0.01 to 0.1% and more preferably 0.01 to 0.05%.

B :. 0.005% or less

B is effective in strengthening steel and can thus be added according to demand. When the B amount is 0.005% or less, an increase in strength can be easily controlled, thereby achieving excellent formability. Therefore, when B is added, the amount is 0.005% or less. In general, the amount is preferably 0.0001 to 0.005% and more preferably 0.0001 to 0.003%.

Ni: 1% or less

Ni is an austenite stabilizing element which causes austenite to remain and is effective in increasing strength, and thus can be added according to demand. When the Ni amount is 1% or less, ductility of a steel sheet can be easily increased. Therefore, when Ni is added, the amount is 1% or less. In general, the amount is preferably 0.01 to 1%.

Ca and REM: at least one in total of 0.01% or less

In the present invention, "REM" represents at least one of the rare earth elements. Ca and REM have the function to control the form of a sulfide inclusion and thus have the effect of improving elongation and stretch flange formability of a steel sheet, and thus can be added according to demand. When the total of these elements exceeds 0.01%, these effects are saturated. Therefore, when Ca and REM are added, the total of at least one of the elements is preferably 0.01% or less. In general, the total is preferably about 0.001 to 0.01% and more preferably 0.001 to 0.005%.

Besides the above-described elements and Fe in the balance, various impurities in the production process and trace amounts of essential elements in the production process are inevitably mixed. However, these inevitable impurities are permissible as long as they have no particular influence on the advantage of the present invention.

From the viewpoint of anti-secondary work embrittlement, it is preferable to satisfy the relational expression, $(-10 \times C + 5 \times Si - Mn + 6 \times Al) \% \geq -0.5$. Although details of reasons for this are not necessarily known, a conceivable reason is that in order to suppress coarsening of austenite grains at a high temperature due to a decrease in the $Ac_3$ point, a decrease in $Ac_3$ point due to the addition of C and Mn and an increase in $Ac_3$ point due to the addition of Si and Al are balanced by satisfying the above range, thereby improving the anti-secondary work embrittlement.

Next, the metal structure of the steel sheet will be described.

Residual austenite phase: volume ratio of 3 to 20%

In the present invention, the strain-induced transformation of a residual austenite phase is effectively utilized so that excellent surface appearance and anti-secondary work embrittlement and not only high strength but also high ductility can be imparted to the alloyed hot-dip galvanized steel sheet as a final product. Therefore, it is very important to control the volume ratio of the residual austenite. From the viewpoint of securing high ductility, the ratio of the residual austenite phase is 3% or more. On the other hand, when the ratio of the residual austenite phase is 20% or less, the formation of martensite after forming is suppressed, and thus such a ratio is suitable in view of brittleness. Therefore, the ratio of the residual austenite phase is 20% or less. The metal structure of a steel sheet used as the alloyed hot-dip galvanized steel sheet of the present invention includes a ferrite main phase and a residual austenite phase as a second phase. However, the volume ratio of the ferrite phase is preferably 40 to 90% from the viewpoint of securing high ductility. Examples of a metal structure other than the residual austenite phase in the second phase include a bainite phase, a martensite phase and/or a pearlite phase. The total volume ratio of these phases is preferably 7 to 50%. The average grain size of the ferrite main phase is preferably 15 $\mu$m or less because the anti-secondary work embrittlement can be easily improved.

Next, a method of producing the alloyed hot-dip galvanized steel sheet of the present invention will be described.

In the present invention, steel satisfying the conditions of the above composition is continuously cast to form a cast slab, and then the cast slab is hot-rolled and cold-rolled to prepare a steel sheet. However, the conditions for these processes are not particularly limited. Then, in a continuous galvanizing line, the steel sheet is annealed by holding in a temperature range of 730°C to 900°C for 60 to 300 seconds, cooled at 3 to 100 °C/s, held in a temperature range of 350°C to 600°C for 30 to 250 seconds, hot-dip galvanized, and then alloyed at 470°C to 600°C.

In the production method, excellent surface appearance and anti-secondary work embrittlement and not only high strength but also high ductility can be imparted to the alloyed hot-dip galvanized steel sheet as the final product.

Each of the production conditions will be described in further detail below.

Annealing temperature: 730 to 900°C

Holding time: 60 to 300 seconds

Annealing is performed in austenite region or intercritical region including an austenite phase and a ferrite phase. When the annealing temperature is 730°C or more and the holding time is 60 seconds or more, it is easy to dissolve a carbide in the steel sheet, completely recrystallize ferrite, and impart ductility. On the other hand, when the annealing temperature is 900°C or less, coarsening of austenite grains is suppressed, and the number of ferrite nucleation sites formed from the second phase by subsequent cooling is easily increased. Further, when the holding time is 300 seconds or less, coarsening of AlN is suppressed, and the anti-secondary work embrittlement is easily improved. Therefore, the annealing temperature is 730 to 900°C, and the holding time is 60 to 300 seconds.

Cooling rate: 3 to 100 °C/s

When the cooling rate is 3 °C/s or more, precipitation of pearlite is suppressed, dissolved Carbon content in untransformed austenite tends to increase, and thus the intended metal structure (residual austenite phase) can be easily obtained. When the cooling rate is 100 °C/s or less, growth of ferrite is promoted to increase the volume ratio of ferrite, and thus sufficient ductility can be easily secured. Therefore, the cooling rate is 3 to 100 °C/s. Although the scope of the present invention includes a case in which the cooling rate changes during cooling, the average cooling rate is preferably 10 °C/s or more and more preferably over 20 °C/s from the viewpoint of productivity.

Holding temperature range: 350°C to 600°C

When the holding temperature is 600°C or less, precipitation of a carbide in untransformed austenite is suppressed. When the holding temperature is 350°C or more, precipitation of a carbide in bainitic ferrite due to lower bainite transformation is suppressed to easily form stable residual austenite. Therefore, the holding temperature is 350°C to 600°C. In order to stably produce residual austenite, the holding temperature is preferably 500°C or less.

Holding time: 30 to 250 seconds

The holding time pays a very important role for controlling residual austenite. Namely, when the holding time is 30 seconds or more, stabilization of untransformed austenite proceeds, and thus the amount of residual austenite is easily secured, easily obtaining desired properties. On the other hand, when the holding time is 250 seconds or less, line speed need not be extremely decreased even in a CGL line where austempering cannot be performed for a long time, thereby causing an advantage of productivity. Therefore, the holding time is 30 to 250 seconds. The holding time is preferably 70 seconds or more in order to stably secure residual austenite and preferably 200 seconds or less from the viewpoint of productivity.

Alloying temperature: 470°C to 600°C

The alloying temperature after hot-dip galvanization must be higher than the plating bath temperature, and the lower limit is 470°C. When the alloying temperature is 600°C or less, like in the case where the holding temperature is 600°C or less, precipitation of a carbide in untransformed austenite is suppressed, and thus stable residual austenite can be easily obtained. Therefore, the alloying temperature is 470°C to 600°C.

In the production method of the present invention, the specified annealing temperature, holding temperature, and alloying temperature need not be constant as long as they are in the above respective ranges. The plating conditions may be in a usual operation range, i.e., coating weight may be 20 to 70 g/m$^2$, and the amount of Fe in a plating layer may be about 6 to 15%.

EXAMPLES

REFERENCE EXAMPLE 1 (Effect of composition of steel sheet)

Molten steel having each of the compositions shown in Table 1 was prepared by a converter and continuously cast to form a cast slab. The resulting slab was heated to 1250°C and then hot-rolled at a finish rolling temperature of 900°C to prepare a hot-rolled steel sheet having a thickness of 3.0 mm. The hot-rolled steel sheet produced as described above was visually observed for the occurrence of scabs. The presence of scabs is shown in Table 2.

After hot-rolling, the hot-rolled steel sheet was pickled and further cold-rolled to prepare a cold-rolled steel sheet having a thickness of 1.2 mm. Then, in a continuous galvanizing line, each cold-rolled steel sheet was annealed at 820°C, cooled at a rate of 10°C/s, galvanized with coating weight of 50/50 g/m$^2$ by a zinc plating bath at 460°C, and then alloyed at 520°C to prepare an alloyed hot-dip galvanized steel sheet.

Since the surface appearance of an alloyed hot-dip galvanized steel sheet are significantly inhibited by scabs, cracking in a slab, and plating defects, the surface appearance of the alloyed hot-dip galvanized steel sheets are also shown in Table 2. Good surface appearance represent a state in which a final product has a uniform surface with beauty without defects, and poor surface appearance represent a state in which surface defects such as scabs or non-plating occur.

Further, each of the resulting alloyed hot-dip galvanized steel sheets was temper-rolled of 0.5%, and mechanical properties were examined. As the mechanical properties, tensile strength (TS) and elongation (El) were measured using a JIS No. 5 tensile specimen obtained from each steel sheet in a direction perpendicular to the rolling direction. The measured values and values of TS × El are also shown in Table 2.

The anti-secondary work embrittlement was evaluated by the following method:

A cylindrical sheet having a diameter of 95 mm was obtained from each of the resulting alloyed hot-dip galvanized steel sheets and then formed into a cylindrical cup having a diameter of 50 mm by deep drawing at a drawing ratio of 1.9. The edge of each of the cylindrical cups was trimmed to prepare a sample having a height of 30 mm. Then, the sample was placed on a truncated cone-shaped mold with a tip of 60° so that the bottom faced upward, and the whole of a tester was cooled to a predetermined temperature. After holding for a predetermined time, a load was applied to the sample from above, and a critical temperature (longitudinal crack transition temperature) where a brittle crack occurred in the side wall of the cylindrical cup was determined. The critical temperature was used as an index for anti-secondary work embrittlement, for evaluating the steel sheets obtained from steel Nos. 1-A to 1-Z. The results are also shown in Table 2.

The alloyed hot-dip galvanized steel sheets obtained from steel Nos. 1-A to 1-N satisfying the composition as described in claim 1 were excellent in surface appearance and anti-secondary work embrittlement. However, the alloyed hot-dip galvanized steel sheets obtained from steel Nos. 1-O to 1-V, 1-Y, and 1-Z were inferior in one or both of the surface appearance and the anti-secondary work embrittlement. Steel No. 1-W having a low C content had insufficient strength, and the alloyed hot-dip galvanized steel sheet obtained from steel No. 1-X having a small total of Al + Si showed insufficient elongation (El).

The above-mentioned results indicate that an alloyed hot-dip galvanized steel sheet obtained from steel satisfying the requirements of steel composition specified in claim 1 has excellent surface appearance, high strength, and excellent anti-secondary work embrittlement.

EXAMPLE 2 (Effect of composition of steel sheet and residual austenite)

Molten steel having each of the compositions shown in Table 3 was prepared by a converter and a hot-rolled steel sheet having a thickness of 3.0 mm was prepared by the same method as in Example 1. The hot-rolled steel sheet produced as described above was visually observed for the occurrence of scabs. The presence of scabs is shown in Tables 4-1 and 4-2.

After hot-rolling, the hot-rolled steel sheet was pickled and further cold-rolled to prepare a cold-rolled steel sheet having a thickness of 1.2 mm. Then, in a continuous galvanizing line, each cold-rolled steel sheet was heat-treated under the conditions shown in Tables 4-1 and 4-2, plated at 50/50 g/m$^2$, and then alloyed to prepare an alloyed hot-dip galvanized steel sheet.

Like in Example 1, the surface appearances of the resulting alloyed hot-dip galvanized steel sheets are also shown in Tables 4-1 and 4-2.

Further, each of the resulting alloyed hot-dip galvanized steel sheets was measured with respect to tensile strength (TS) and elongation (El) by the same method as in Example 1. The measured values and values of TS × El are also shown in Tables 4-1 and 4-2.

With respect to the anti-secondary work embrittlement, a critical temperature (longitudinal crack transition temperature) where a brittle crack occurred in the side wall of a cylindrical cup was determined by the same method as in Example 1. The critical temperature was used as an index for the anti-secondary work embrittlement, for evaluating steel sheets of Invention Examples 2-1, 2-3, 2-4, 2-6, 2-7, 2-9 to 2-11, 2-13, 2-15 to 2-18, 2-22 to 2-24, 2-26 and 2-27, Reference Examples 2-2, 2-5, 2-8, 2-12, 2-14, 2-19 to 2-21, 2-25 and 2-28 and Comparative Examples 2-29 to 2-38. The results are also shown in Tables 4-1 and 4-2.

Tables 3, 4-1, and 4-2 indicate that in the alloyed hot-dip galvanized steel sheets obtained from steel Nos. 2-S, 2-U to 2-W, and 2-Y not satisfying any one of the N amount of less than 0.005%, Al ≤ (1.25 × C$^{0.5}$ - 0.57 × Si + 0.625 × Mn)%, and the Si amount of 0.5% or less, the surface appearance were deteriorated. In addition, in the alloyed hot-dip galvanized steel sheets obtained from steel Nos. 2-Q to 2-U not satisfying (0.0006 × Al)% ≤ N ≤ (0.0058 - 0.0026 × Al)%, the anti-secondary work embrittlement was deteriorated.

Further, Tables 4-1 and 4-2 indicate that in the alloyed hot-dip galvanized steel sheets of Reference Examples 2-2, 2-5, 2-8, 2-12, 2-14, 2-19, 2-20, 2-25, and 2-28 containing small amounts of residual austenite, both the elongation and the values of TS × El are low, but these steel sheets have excellent surface appearance and anti-secondary work embrittlement and high tensile strength (TS). On the other hand, in the alloyed hot-dip galvanized steel sheets of Comparative Examples 2-29 to 2-38, any one of the surface appearance, anti-secondary work embrittlement, and tensile strength (TS) is deteriorated.

Since the alloyed hot-dip galvanized steel sheets of Invention Examples 2-1, 2-3, 2-4, 2-6, 2-7, 2-9 to 2-11, 2-13, 2-15 to 2-18, 2-22 to 2-24, 2-26 and 2-27 and Reference Example 2-21 were produced under the production conditions of the method of the present invention and satisfied the condition of the amount of residual austenite, these steel sheets have not only excellent surface appearance and anti-secondary work embrittlement and high tensile strength but also high elongation (El) and high values of TS × El.

REFERENCE EXAMPLE 3 (Effects of composition of steel sheet and residual austenite, and cracking in slab)

Molten steel having each of the compositions shown in Table 5 was prepared by a converter and continuously cast to form a cast slab. The occurrence of cracking in the slab is shown in Tables 6-1 and 6-2. The occurrence of cracking was determined by visual observation as well as color check after the slab was cooled to room temperature.
The resulting slab was heated to 1250°C and then hot-rolled at a finish rolling temperature of 900°C to prepare a hot-rolled steel sheet having a thickness of 3.0 mm. The hot-rolled steel sheet produced as described above was visually observed for the occurrence of scabs. The presence of scabs is shown in Tables 6-1 and 6-2.
After hot-rolling, the hot-rolled steel sheet was pickled and further cold-rolled to prepare a cold-rolled steel sheet having a thickness of 1.2 mm. Then, in a continuous galvanizing line, each cold-rolled steel sheet was heat-treated under the conditions shown in Tables 6-1 and 6-2, plated at 50/50 g/m$^2$, and then alloyed so that the Fe amount in the plating layer was 9%.
Further, each of the resulting alloyed hot-dip galvanized steel sheets was measured with respect to tensile strength (TS) and elongation (El) by the same method as in Example 1. The measured values and values of TS × El are also shown in Tables 6-1 and 6-2.
Table 6-1 indicates that the alloyed hot-dip galvanized steel sheets of Reference Examples 3-5 and 3-8 to 3-19 satisfying the steel sheet composition as described in claim 1 cause no cracking in the slabs and no scabs in the hot-rolled steel sheets and have excellent surface appearance. Also, the anti-secondary work embrittlement and tensile strength are excellent.
On the other hand, in the alloyed hot-dip galvanized steel sheets Comparative Examples 3-1 to 3-4, 3-6, 3-7, and 3-20 to 3-30 not satisfying any-one of the steel sheet components, i.e., the N amount, (0.0006 × Al)% ≤ N ≤ (0.0058 - 0.0026 × Al)%, and Al ≤ (1.25 × C$^{0.5}$ - 0.57 × Si + 0.625 × Mn)%, a problem occurred in at least one of deterioration in the surface appearance due to cracking in the slabs, scabs in the hot-rolled steel sheets, or non-plating, and the anti-secondary work embrittlement. Comparative Example 3-30 also had low tensile strength (TS).
In particular, as shown in Comparative Example 3-31 in Table 6-2, steel 3-W containing a large amount of Mn exhibits a significant increase in strength but very low elongation. Further, as shown in Comparative Example 3-32 in Table 6-2, steel 3-X having a small total of Al + Si exhibits very low elongation for strength and a low value of TS × El.
Since the alloyed hot-dip galvanized steel sheets of Reference Examples 3-5, 3-8, 3-11, 3-12, and 3-15 to 3-18 were produced under the production conditions as described in Table 6-1, these steel sheets have appropriate amounts of residual austenite and have not only excellent surface appearance and anti-secondary work embrittlement and high strength but also high elongation (El) and high values of TS × El.

Table 1 (not in accordance with the invention)

| Steel | Component of steel (% by mass) | | | | | | | | | | Al+Si (mass%) | 0.0006Al (mass%) | 0.0058-0.0026Al (mass%) | 1.25C$^{0.5}$-0.57Si +0.625Mn (mass%) |
|---|---|---|---|---|---|---|---|---|---|---|---|---|---|---|
| | C | Si | Mn | P | S | Al | N | Mo,V,Cr | Ti, Nb, B, Ni | Ca, REM | | | | |
| 1-A | 0.15 | 0.21 | 2.1 | 0.016 | 0.0018 | 0.9 | 0.0025 | - | B:0.0005 | - | 1.1 | 0.0005 | 0.0035 | 1.68 |
| 1-B | 0.09 | 0.01 | 2.4 | 0.029 | 0.0010 | 1.5 | 0.0012 | Mo:0.1, V:0.005 | - | Ca:0.001 | 1.5 | 0.0009 | 0.0019 | 1.87 |
| 1-C | 0.11 | 0.41 | 1.8 | 0.008 | 0.0025 | 1.0 | 0.0023 | - | Nb:0.02 | - | 1.4 | 0.0006 | 0.0032 | 1.36 |
| 1-D | 0.17 | 0.28 | 1.7 | 0.009 | 0.0003 | 0.7 | 0.0030 | Cr:0.3 | - | - | 1.0 | 0.0004 | 0.0040 | 1.42 |
| 1-E | 0.16 | 0.45 | 1.6 | 0.031 | 0.0017 | 0.5 | 0.0036 | Cr:0.3 | - | - | 1.0 | 0.0003 | 0.0045 | 1.24 |
| 1-F | 0.12 | 0.16 | 1.5 | 0.012 | 0.0036 | 1.2 | 0.0018 | Cr:0.1, V:0.01 | Ni:0.1 | - | 1.4 | 0.0007 | 0.0027 | 1.28 |
| 1-G | 0.11 | 0.30 | 1.8 | 0.022 | 0.0008 | 1.0 | 0.0028 | Cr:0.3 | - | - | 1.3 | 0.0006 | 0.0032 | 1.37 |
| 1-H | 0.23 | 0.37 | 1.9 | 0.008 | 0.0014 | 1.3 | 0.0021 | - | Ti:0.02 | REM:0.002 | 1.7 | 0.0008 | 0.0024 | 1.58 |
| 1-I | 0.12 | 0.05 | 1.8 | 0.022 | 0.0019 | 0.8 | 0.0032 | Cr:0.3 | - | - | 0.9 | 0.0005 | 0.0037 | 1.53 |
| 1-J | 0.13 | 0.18 | 1.5 | 0.007 | 0.0024 | 1.1 | 0.0022 | - | - | Ca:0.002 | 1.3 | 0.0007 | 0.0029 | 1.29 |
| 1-K | 0.12 | 0.27 | 1.6 | 0.011 | 0.0009 | 0.7 | 0.0018 | Cr:0.3 | - | - | 1.0 | 0.0004 | 0.0040 | 1.28 |
| 1-L | 0.10 | 0.36 | 1.8 | 0.015 | 0.0028 | 0.4 | 0.0035 | - | Nb:0.03 | REM:0.003 | 0.8 | 0.0002 | 0.0048 | 1.32 |
| 1-M | 0.19 | 0.24 | 2.4 | 0.008 | 0.0011 | 0.8 | 0.0013 | Cr:0.2 | Ni:0.05 | - | 1.0 | 0.0005 | 0.0037 | 1.91 |
| 1-N | 0.12 | 0.40 | 2.3 | 0.016 | 0.0003 | 0.5 | 0.0027 | V:0.005 | B:0.002 | - | 0.9 | 0.0003 | 0.0045 | 1.64 |
| 1-O | 0.20 | 0.02 | 2.0 | 0.009 | 0.0041 | 1.2 | 0.0030 | Mo:0.45 | - | Ca:0.003 | 1.2 | 0.0007 | 0.0027 | 1.80 |
| 1-P | 0.10 | 0.01 | 1.2 | 0.008 | 0.0028 | 0.8 | 0.0044 | V:0.1 | Ti:0.01 | REM:0.005 | 0.8 | 0.0005 | 0.0037 | 1.14 |
| 1-Q | 0.15 | 0.01 | 2.0 | 0.023 | 0.0014 | 1.7 | 0.0009 | Mo:0.2 | - | - | 1.7 | 0.0010 | 0.0014 | 1.73 |
| 1-R | 0.12 | 0.12 | 2.0 | 0.013 | 0.0009 | 0.8 | 0.0045 | - | Ti:0.02, B:0.0005 | - | 0.9 | 0.0005 | 0.0037 | 1.61 |
| 1-S | 0.08 | 0.35 | 2.1 | 0.009 | 0.0029 | 1.7 | 0.0012 | Cr:0.2 | - | - | 2.1 | 0.0010 | 0.0014 | 1.47 |
| 1-T | 0.17 | 0.01 | 2.2 | 0.015 | 0.0016 | 1.0 | 0.0054 | - | Ti:0.4 | - | 1.0 | 0.0006 | 0.0032 | 1.88 |
| 1-U | 0.11 | 0.21 | 1.4 | 0.011 | 0.0020 | 0.9 | 0.0056 | - | Nb:0.01, B:0.003 | - | 1.1 | 0.0005 | 0.0035 | 1.17 |

(continued)

| Steel | Component of steel (% by mass) | | | | | | | | | | Al+Si (mass%) | 0.0006Al (mass%) | 0.0058-0.0026Al (mass%) | $1.25C^{0.5}-0.57Si+0.625Mn$ (mass%) |
|---|---|---|---|---|---|---|---|---|---|---|---|---|---|---|
| | C | Si | Mn | P | S | Al | N | Mo,V, Cr | Ti, Nb, B, Ni | Ca, REM | | | | |
| 1-V | 0.12 | 0.43 | 1.6 | 0.012 | 0.0033 | 1.3 | <u>0.0051</u> | - | - | - | 1.7 | 0.0008 | <u>0.0024</u> | <u>1.19</u> |
| 1-W | <u>0.03</u> | 0.42 | 2.0 | 0.002 | 0.0008 | 0.8 | 0.0032 | V:0.05 | - | Ca:0.003 | 1.2 | 0.0005 | 0.0037 | 1.23 |
| 1-X | 0.11 | 0.13 | 1.7 | 0.010 | 0.0032 | 0.3 | 0.0041 | - | Ni:0.2 | - | <u>0.4</u> | 0.0002 | 0.0050 | 1.40 |
| 1-Y | 0.15 | <u>0.80</u> | 1.9 | 0.008 | 0.0002 | 1.1 | 0.0031 | Cr:0.2, Mo:0.1 | - | - | 1.9 | 0.0007 | <u>0.0029</u> | 1.22 |
| 1-Z | 0.13 | 0.24 | <u>0.5</u> | 0.012 | 0.0041 | 1.2 | 0.0011 | - | - | - | 1.4 | 0.0007 | 0.0027 | <u>0.63</u> |
| Underline: out of the range of the present invention. | | | | | | | | | | | | | | |

Table 2 (not in accordance with the invention)

| Steel | Scabs of hot-rolled steel sheet | Alloyed hot-dip galvanized steel sheet | | | | | Remarks |
|---|---|---|---|---|---|---|---|
| | | Surface appearance[*1] | Mechanical properties | | | Anti-secondary work embrittlement [*2] | |
| | | | TS (MPa) | El (%) | TS×El (MPa%) | | |
| 1-A | No | ○ | 794 | 26.3 | 20874 | ⊙ | Example |
| 1-B | No | ○ | 849 | 25.9 | 22022 | ⊙ | Example |
| 1-C | No | ○ | 740 | 29.9 | 22134 | ⊙ | Example |
| 1-D | No | ○ | 817 | 28.2 | 23039 | ⊙ | Example |
| 1-E | No | ○ | 793 | 27.0 | 21411 | ⊙ | Example |
| 1-F | No | ○ | 650 | 32.7 | 21224 | ⊙ | Example |
| 1-G | No | ○ | 652 | 32.8 | 21386 | ⊙ | Example |
| 1-H | No | ○ | 921 | 24.9 | 22946 | ⊙ | Example |
| 1-I | No | ○ | 621 | 34.1 | 21176 | ⊙ | Example |
| 1-J | No | ○ | 567 | 37.0 | 20979 | ⊙ | Example |
| 1-K | No | ○ | 670 | 31.9 | 21373 | ⊙ | Example |
| 1-L | No | ○ | 659 | 29.5 | 19434 | ○ | Example |
| 1-M | No | ○ | 996 | 20.4 | 20334 | ○ | Example |
| 1-N | No | ○ | 906 | 22.0 | 19903 | ○ | Example |
| 1-O | No | ○ | 1002 | 20.8 | 20875 | ✕ | Comparative Example |
| 1-P | No | ○ | 390 | 50.3 | 19617 | ✕ | Comparative Example |
| 1-Q | No | ○ | 868 | 26.3 | 22819 | ✕ | Comparative Example |
| 1-R | No | ○ | 727 | 27.2 | 19760 | ✕ | Comparative Example |
| 1-S | Present | ✕ | 875 | 27.9 | 24444 | ⊙ | Comparative Example |
| 1-T | No | ✕ | 1450 | 13.8 | 20031 | ✕ | Comparative Example |
| 1-U | No | ✕ | 678 | 30.3 | 20588 | ✕ | Comparative Example |
| 1-V | Prsent | ✕ | 684 | 33.9 | 23233 | ✕ | Comparative Example |
| 1-W | No | ○ | 479 | 31.7 | 15177 | ⊙ | Comparative Example |
| 1-X | No | ○ | 618 | 20.8 | 12854 | ○ | Comparative Example |
| 1-Y | No | ✕ | 1006 | 24.1 | 24205 | ✕ | Comparative Example |

(continued)

| Steel | Scabs of hot-rolled steel sheet | Alloyed hot-dip galvanized steel sheet | | | | | Remarks |
|---|---|---|---|---|---|---|---|
| | | Surface appearance*1 | Mechanical properties | | | Anti-secondary work embrittlement *2 | |
| | | | TS (MPa) | EI (%) | TS×EI (MPa%) | | |
| 1-Z | Present | × | 424 | 36.8 | 15603 | ⊙ | Comparative Example |

Underline: out of the range of the present invention.
*1:○ indicates a galvanized steel sheet with good surface appearance, and × indicates a galvanized steel sheet with poor surface appearance.
*2:⊙ incidates a longitudinal crack transition temperature of less than -70°C, ○ incidates a longitudinal crack transition temperature of -70 to -40°C, and × incidates a longitudinal crack transition temperature of over -40°C.

Table 3

| Steel | Component of steel (% by mass) | | | | | | | | | | Al+Si (mass%) | 0.0006Al (mass%) | 0.0058-0.0026Al (mass%) | 1.25C$^{0.5}$-0.5Si +0.625Mn (mass%) |
| --- | --- | --- | --- | --- | --- | --- | --- | --- | --- | --- | --- | --- | --- | --- |
| | C | Si | Mn | P | S | Al | N | Mo, V, Cr | Ti, Nb, B, Ni | Ca, REM | | | | |
| 2-A | 0.10 | 0.13 | 1.9 | 0.012 | 0.0010 | 0.8 | 0.0035 | Mo:0.1 | - | - | 0.9 | 0.0005 | 0.0037 | 1.51 |
| 2-B | 0.12 | 0.01 | 1.7 | 0.014 | 0.0003 | 0.8 | 0.0025 | Cr:0.3 | - | - | 0.8 | 0.0005 | 0.0037 | 1.49 |
| 2-C | 0.20 | 0.35 | 2.0 | 0.009 | 0.0017 | 1.5 | 0.0012 | - | - | REM:0.002 | 1.9 | 0.0009 | 0.0019 | 1.61 |
| 2-D | 0.10 | 0.33 | 1.6 | 0.029 | 0.0009 | 1.0 | 0.0020 | - | Nb:0.01 | Ca:0.003 | 1.3 | 0.0006 | 0.0032 | 1.21 |
| 2-E | 0.17 | 0.01 | 1.7 | 0.031 | 0.0008 | 1.0 | 0.0017 | Cr:0.3 | - | - | 1.0 | 0.0006 | 0.0032 | 1.57 |
| 2-F | 0.12 | 0.24 | 1.7 | 0.019 | 0.0020 | 0.7 | 0.0031 | - | Nb:0.02 | - | 0.9 | 0.0004 | 0.0040 | 1.36 |
| 2-G | 0.16 | 0.15 | 1.8 | 0.023 | 0.0036 | 1.2 | 0.0018 | Cr:0.3 | Ti:0.01 | REM:0.001 | 1.4 | 0.0007 | 0.0027 | 1.54 |
| 2-H | 0.08 | 0.01 | 2.3 | 0.008 | 0.0014 | 1.7 | 0.0012 | V:0.1 | - | Ca:0.002 | 1.7 | 0.0010 | 0.0014 | 1.79 |
| 2-I | 0.12 | 0.05 | 1.7 | 0.028 | 0.0023 | 1.0 | 0.0016 | Cr:0.3 | - | - | 1.1 | 0.0006 | 0.0032 | 1.47 |
| 2-J | 0.17 | 0.32 | 1.7 | 0.009 | 0.0008 | 0.7 | 0.0032 | Cr:0.3 | - | - | 1.0 | 0.0004 | 0.0040 | 1.40 |
| 2-K | 0.12 | 0.26 | 1.0 | 0.016 | 0.0011 | 0.7 | 0.0036 | - | Ti:0.2, B:0.002 | REM:0.003 | 1.0 | 0.0004 | 0.0040 | 0.91 |
| 2-L | 0.11 | 0.28 | 1.6 | 0.005 | 0.0024 | 0.7 | 0.0030 | Cr:0.3 | - | - | 1.0 | 0.0004 | 0.0040 | 1.25 |
| 2-M | 0.16 | 0.17 | 2.3 | 0.012 | 0.0015 | 1.3 | 0.0023 | Mo:0.2 | Ni:0.1 | - | 1.5 | 0.0008 | 0.0024 | 1.84 |
| 2-N | 0.09 | 0.31 | 1.8 | 0.025 | 0.0031 | 0.4 | 0.0044 | Cr:0.1 | Nb:0.01 | - | 0.7 | 0.0002 | 0.0048 | 1.32 |
| 2-O | 0.15 | 0.07 | 2.1 | 0.008 | 0.0011 | 0.8 | 0.0032 | - | - | - | 0.9 | 0.0005 | 0.0037 | 1.76 |
| 2-P | 0.12 | 0.18 | 2.5 | 0.014 | 0.0008 | 0.7 | 0.0027 | V:0.1 | Ti:0.01 | - | 0.9 | 0.0004 | 0.0040 | 1.89 |
| 2-Q | 0.17 | 0.01 | 2.3 | 0.026 | 0.0013 | 1.8 | 0.0008 | Cr:0.2 Mo:0.1 | - | - | 1.8 | 0.0011 | 0.0011 | 1.95 |
| 2-R | 0.08 | 0.28 | 1.9 | 0.011 | 0.0002 | 0.7 | 0.0042 | Cr:0.3 | B:0.002 | - | 1.0 | 0.0004 | 0.0040 | 1.38 |
| 2-S | 0.10 | 0.03 | 1.7 | 0.023 | 0.0003 | 1.3 | 0.0057 | - | - | - | 1.3 | 0.0008 | 0.0024 | 1.44 |
| 2-T | 0.14 | 0.01 | 2.0 | 0.010 | 0.0016 | 1.2 | 0.0031 | - | Ni:0.05 | Ca:0.002 | 1.2 | 0.0007 | 0.0027 | 1.71 |
| 2-U | 0.12 | 0.33 | 1.7 | 0.009 | 0.0026 | 1.5 | 0.0041 | Mo:0.1 | B:0.001 | - | 1.8 | 0.0009 | 0.0019 | 1.31 |
| 2-V | 0.10 | 0.42 | 1.6 | 0.018 | 0.0011 | 1.3 | 0.0015 | - | Ti:0.01, Nb:0.01 | - | 1.7 | 0.0008 | 0.0024 | 1.16 |

(continued)

| Steel | Component of steel (% by mass) | | | | | | | | | | Al+Si (mass%) | 0.0006Al (mass%) | 0.0058-0.0026Al (mass%) | $1.25C^{0.5}$-0.5Si +0.625Mn (mass%) |
|---|---|---|---|---|---|---|---|---|---|---|---|---|---|---|
| | C | Si | Mn | P | S | Al | N | Mo, V, Cr | Ti, Nb, B, Ni | Ca, REM | | | | |
| 2-W | 0.14 | <u>0.90</u> | 1.8 | 0.036 | 0.0034 | 0.2 | 0.0047 | Cr:0.2, V:0.005 | - | - | 1.1 | 0.0001 | 0.0053 | 1.08 |
| 2-X | <u>0.02</u> | 0.13 | 2.2 | 0.014 | 0.0010 | 1.3 | 0.0021 | - | Ti:0.01 | - | 1.4 | 0.0008 | 0.0024 | 1.48 |
| 2-Y | 0.11 | 0.28 | <u>0.4</u> | 0.008 | <u>0.0160</u> | 1.0 | 0.0026 | Mo:0.3 | - | Ca:0.001 | 1.3 | 0.0006 | 0.0032 | <u>0.50</u> |
| 2-Z | 0.15 | 0.15 | 1.5 | 0.023 | 0.0003 | 0.2 | 0.0045 | Cr:0.2 | - | REM:0.001 | <u>0.4</u> | 0.0001 | 0.0053 | 1.34 |

Underline: out of the range of the present invention.
Steel composition 2-K is a comparative one.

Table 4-1 (Examples 2-2, 2-5, 2-8, 2-12, 2-14, 2-19, 2-20, 2-21, 2-25 and 2-28 are. Reference Examples)

| | Steel | Scabs of hot-rolled steel sheet | Alloyed hot-dip galvanized steel sheet | | | | | | | | | | | |
| | | | Production condition | | | | | | Residual γ (%) | Surface appearance*1 | Mechanical properties | | | Anti-secondary work embrittlement*2 |
| | | | Annealing | | Cool-ing rate (°C/s) | Holding temp. (°C) | Holding time (s) | Alloying temp. (°C) | | | TS (MPa) | El (%) | TS×El (MPa%) | |
| | | | Temp. (°C) | Holding time (s) | | | | | | | | | | |
|---|---|---|---|---|---|---|---|---|---|---|---|---|---|---|
| Invention example 2-1 | 2-A | No | 840 | 100 | 38 | 510 | 130 | 540 | 6.6 | ○ | 668 | 29.7 | 19808 | ⊙ |
| example 2-2 | 2-A | No | 830 | 80 | 30 | 470 | 20 | 550 | 1.5 | ○ | 691 | 27.3 | 18864 | ⊙ |
| Invention example 2-3 | 2-B | No | 820 | 140 | 9 | 440 | 90 | 540 | 6.1 | ○ | 630 | 33.9 | 21357 | ⊙ |
| Invention example 2-4 | 2-B | No | 830 | 140 | 11 | 440 | 50 | 540 | 4.2 | ○ | 657 | 31.1 | 20433 | ⊙ |
| example 2-5 | 2-B | No | 800 | 110 | 8 | 440 | 110 | 620 | 0.4 | ○ | 621 | 28.7 | 17823 | ○ |
| Invention example 2-6 | 2-C | No | 790 | 220 | 19 | 500 | 100 | 540 | 12.7 | ○ | 898 | 26.3 | 23647 | ⊙ |
| Invention example 2-7 | 2-C | No | 810 | 180 | 73 | 460 | 120 | 530 | 12.5 | ○ | 903 | 26.4 | 23839 | ⊙ |
| example 2-8 | 2-C | No | 800 | 200 | 25 | 650 | 130 | 540 | 1.6 | ○ | 752 | 24.2 | 18198 8 | ⊙ |
| Invention example 2-9 | 2-D | No | 830 | 170 | 17 | 440 | 160 | 540 | 4.9 | ○ | 524 | 38.9 | 20384 | ⊙ |
| Invention example 2-10 | 2-E | No | 800 | 110 | 18 | 420 | 90 | 540 | 8.1 | ○ | 786 | 27.8 | 21851 | ⊙ |

EP 1 867 746 B1

17

| | Steel | Scabs of hot-rolled steel sheet | Alloyed hot-dip galvanized steel sheet | | | | | | | | | | | |
|---|---|---|---|---|---|---|---|---|---|---|---|---|---|---|
| | | | Production condition | | | | | | | Surface appearance[*1] | Mechanical properties | | | Anti-secondary work embrittlement[*2] |
| | | | Annealing | | Cool-ing rate (°C/s) | Holding temp. (°C) | Holding time (s) | Alloying temp. (°C) | Residual γ (%) | | TS (MPa) | El (%) | TS×El (MPa%) | |
| | | | Temp. (°C) | Holding time (s) | | | | | | | | | | |
| Invention example 2-11 | 2-F | No | 820 | 100 | 12 | 490 | 90 | 560 | 7.8 | ○ | 634 | 31.4 | 19935 | ⊙ |
| example 2-12 | 2-F | No | 800 | 30 | 11 | 510 | 100 | 540 | 1.3 | ○ | 490 | 31.3 | 15337 | ⊙ |
| Invention example 2-13 | 2-G | No | 830 | 90 | 23 | 450 | 80 | 530 | 10.2 | ○ | 705 | 30.5 | 21497 | ⊙ |
| example 2-14 | 2-G | No | 700 | 100 | 20 | 430 | 100 | 530 | 0.7 | ○ | 553 | 30.3 | 16756 | ⊙ |
| Invention example 2-15 | 2-H | No | 810 | 180 | 32 | 460 | 110 | 530 | 11.5 | ○ | 826 | 27.6 | 22819 | ⊙ |
| Invention example 2-16 | 2-H | No | 830 | 120 | 44 | 410 | 120 | 540 | 11.3 | ○ | 820 | 28.5 | 23370 | ⊙ |
| Invention example 2-17 | 2-I | No | 840 | 90 | 26 | 450 | 110 | 540 | 7.7 | ○ | 612 | 34.8 | 21198 | ⊙ |
| Invention example 2-18 | 2-J | No | 820 | 150 | 11 | 420 | 90 | 550 | 7.6 | ○ | 788 | 30.0 | 23640 | ⊙ |
| example 2-19 | 2-J | No | 950 | 170 | 17 | 460 | 120 | 540 | 2.3 | ○ | 729 | 27.2 | 19829 | ⊙ |
| example 2-20 | 2-J | No | 800 | 120 | 2 | 400 | 100 | 530 | 2.2 | ○ | 515 | 31.7 | 16326 | ○ |

EP 1 867 746 B1

18

| | Steel | Scabs of hot-rolled steel sheet | Alloyed hot-dip galvanized steel sheet | | | | | | | | | | | |
|---|---|---|---|---|---|---|---|---|---|---|---|---|---|---|
| | | | Production condition | | | | | | Residual $\gamma$ (%) | Surface appearance [*1] | Mechanical properties | | | Anti-secondary work embrittlement [*2] |
| | | | Annealing | | Cool-ing rate (°C/s) | Holding temp. (°C) | Holding time (s) | Alloying temp. (°C) | | | TS (MPa) | EI (%) | TS×EI (MPa%) | |
| | | | Temp. (°C) | Holding time (s) | | | | | | | | | | |
| example 2-21 | 2-K | No | 800 | 80 | 17 | 450 | 80 | 520 | 6.9 | ○ | 832 | 24.1 | 20031 | ⊙ |
| Invention example 2-22 | 2-L | No | 840 | 110 | 36 | 470 | 110 | 530 | 8.5 | ○ | 651 | 33.4 | 21743 | ⊙ |
| Invention example 2-23 | 2-M | No | 850 | 100 | 23 | 440 | 100 | 540 | 10.8 | ○ | 1021 | 21.5 | 21990 | ⊙ |
| Invention example 2-24 | 2-N | No | 830 | 200 | 10 | 480 | 170 | 530 | 7.4 | ○ | 634 | 30.1 | 19075 | ○ |
| example 2-25 | 2-N | No | 840 | 110 | 17 | 310 | 90 | 530 | 1.6 | ○ | 506 | 31.8 | 16091 | ⊙ |
| Invention example 2-26 | 2-O | No | 780 | 180 | 32 | 420 | 140 | 530 | 8.1 | ○ | 721 | 27.1 | 19521 | ○ |
| Invention example 2-27 | 2-P | No | 820 | 120 | 9 | 500 | 200 | 530 | 7.0 | ○ | 891 | 22.0 | 19648 | ○ |
| example 2-28 | 2-P | No | 850 | 100 | 180 | 520 | 160 | 540 | 2.1 | ○ | 1024 | 10.8 | 11059 | ○ |

*1: ○ indicates a galvanized steel sheet with good surface appearance, and × indicates a galvanized steel sheet with poor surface appearance.

*2: ⊙ incidates a longitudinal crack transition temperature of less than -70°C, ○ incidates a longitudinal crack transition temperature of -70 to - 40°C, and × incidates a longitudinal crack transition temperature of over -40°C.

Table 4-2

| | Steel | Scab of hot-rolled steel sheet | Alloyed hot-dip galvanized steel sheet | | | | | | | | | | | |
|---|---|---|---|---|---|---|---|---|---|---|---|---|---|---|
| | | | Production condition | | | | | | Residual γ (%) | Surface appearance*1 | Mechanical properties | | | Anti-secondary work embrittlement*2 |
| | | | Annealing | | Cool-ing rate (°C/s) | Holding temp. (°C) | Holding time (s) | Alloying temp. (°C) | | | TS (MPa) | El (%) | TC×El (MPa%) | |
| | | | Temp. (°C) | Holding time (s) | | | | | | | | | | |
| Comparative exmaple 2-29 | 2-Q | No | 840 | 230 | 12 | 390 | 100 | 510 | 11.3 | ○ | 1009 | 23.0 | 23217 | × |
| Comparative exmaple 2-30 | 2-R | No | 820 | 110 | 29 | 460 | 80 | 540 | 8.9 | ○ | 826 | 24.4 | 20126 | × |
| Comparative exmaple 2-31 | 2-S | No | 810 | 150 | 26 | 410 | 110 | 530 | 9.7 | <u>×</u> | 583 | 36.6 | 21321 | × |
| Comparative exmaple 2-32 | 2-T | No | 780 | 210 | 16 | 530 | 120 | 530 | 9.1 | ○ | 729 | 28.6 | 20827 | × |
| Comparative exmaple 2-33 | 2-U | <u>Present</u> | 830 | 120 | 40 | 460 | 100 | 530 | 13.4 | <u>×</u> | 808 | 29.1 | 23552 | × |
| Comparative exmaple 2-34 | 2-V | <u>Present</u> | 850 | 90 | 15 | 400 | 180 | 540 | 11.2 | <u>×</u> | 692 | 33.5 | 23185 | ⊙ |
| Comparative exmaple 2-35 | 2-W | No | 780 | 90 | 10 | 420 | 90 | 540 | 9.3 | <u>×</u> | 850 | 24.8 | 21098 | ⊙ |
| Comparative exmaple 2-36 | 2-X | No | 780 | 120 | 12 | 510 | 120 | 540 | 1.9 | ○ | 383 | 40.9 | 15665 | ⊙ |
| Comparative exmaple 2-37 | 2-Y | <u>Present</u> | 820 | 150 | 7 | 450 | 120 | 530 | 2.3 | <u>×</u> | 510 | 33.5 | 17085 | ⊙ |
| Comparative exmaple 2-38 | 2-Z | No | 800 | 130 | 21 | 490 | 160 | 540 | 1.2 | ○ | 567 | 21.3 | 12077 | ○ |

Underline: out of the range of the present invention.

*1: ○ indicates a galvanized steel sheet with good surface appearance, and × indicates a galvanized steel sheet with poor surface appearance.

*2: ⊙ incidates a longitudinal crack transition temperature of less than -70°C, O incidates a longitudinal crack transition temperature of -70 to -40°C, and × incidates a longitudinal crack transition temperature of over -40°C.

Table 5 (not in accordance with the invention)

| Steel | Component of steel (% by mass) | | | | | | | | | | Al + Si (mass%) | 0.0006Al (mass%) | 0.0058-0.0026Al (mass%) | $1.25C^{0.5}$-0.57Si +0.625Mn (mass%) |
|---|---|---|---|---|---|---|---|---|---|---|---|---|---|---|
| | C | Si | Mn | P | S | Al | N | Mo,V, Cr | Ti, Nb, B, Ni | Ca, REM | | | | |
| 3-A | 0.15 | 0.01 | 1.6 | 0.011 | 0.0020 | 1.4 | 0.0025 | - | - | - | 1.4 | 0.0008 | 0.0022 | 1.48 |
| 3-B | 0.07 | 0.01 | 2.6 | 0.010 | 0.0025 | 1.7 | 0.0011 | Cr:0.3 | - | - | 1.7 | 0.0010 | 0.0014 | 1.95 |
| 3-C | 0.20 | 0.02 | 2.0 | 0.009 | 0.0041 | 1.2 | 0.0030 | Mo:0.45 | - | Ca:0.003 | 1.2 | 0.0007 | 0.0027 | 1.80 |
| 3-D | 0.10 | 0.01 | 1.2 | 0.008 | 0.0028 | 0.8 | 0.0044 | V:0.1 | Ti:0.01 | REM:0.005 | 0.8 | 0.0005 | 0.0037 | 1.14 |
| 3-E | 0.12 | 0.20 | 2.2 | 0.012 | 0.0014 | 0.8 | 0.0025 | - | Ti:0.04 | - | 1.0 | 0.0005 | 0.0037 | 1.69 |
| 3-F | 0.14 | 0.30 | 1.8 | 0.009 | 0.0008 | 1.0 | 0.0009 | - | Nb:0.05 | - | 1.3 | 0.0006 | 0.0032 | 1.42 |
| 3-G | 0.16 | 0.45 | 1.8 | 0.007 | 0.0032 | 1.2 | 0.0022 | - | B:0.0020 | - | 1.7 | 0.0007 | 0.0027 | 1.37 |
| 3-H | 0.08 | 0.10 | 2.2 | 0.012 | 0.0035 | 1.3 | 0.0020 | Mo:0.1, Cr:0.2 | - | - | 1.4 | 0.0008 | 0.0024 | 1.67 |
| 3-I | 0.23 | 0.50 | 1.8 | 0.010 | 0.0020 | 0.3 | 0.0043 | - | Ni:0.2 | - | 0.8 | 0.0002 | 0.0050 | 1.44 |
| 3-J | 0.12 | 0.25 | 1.6 | 0.012 | 0.0018 | 0.7 | 0.0033 | - | Nb:0.02, B:0.0020 | Ca:0.003, REM:0.003 | 1.0 | 0.0004 | 0.0040 | 1.29 |
| 3-K | 0.16 | 0.01 | 1.9 | 0.014 | 0.0013 | 1.5 | 0.0015 | Mo:0.5 | Ti:0.01 | Ca:0.002 | 1.5 | 0.0009 | 0.0019 | 1.68 |
| 3-L | 0.12 | 0.45 | 1.9 | 0.001 | 0.0015 | 0.25 | 0.0020 | Cr:0.2 | - | REM:0.002 | 0.7 | 0.0002 | 0.0052 | 1.36 |
| 3-M | 0.18 | 0.01 | 2.1 | 0.010 | 0.0030 | 1.8 | 0.0035 | - | - | - | 1.8 | 0.0011 | 0.0011 | 1.84 |
| 3-N | 0.08 | 0.30 | 2.0 | 0.008 | 0.0028 | 0.7 | 0.0055 | Mo:0.3 | - | Ca:0.002 | 1.0 | 0.0004 | 0.0040 | 1.43 |
| 3-O | 0.13 | 0.60 | 1.9 | 0.023 | 0.0013 | 0.2 | 0.0053 | - | Nb:0.03 | - | 0.8 | 0.0001 | 0.0053 | 1.30 |
| 3-P | 0.17 | 0.15 | 1.6 | 0.010 | 0.0016 | 1.2 | 0.0044 | - | Ti:0.02 | - | 1.4 | 0.0007 | 0.0027 | 1.43 |
| 3-Q | 0.13 | 0.00 | 1.9 | 0.010 | 0.0036 | 1.8 | 0.0022 | V:0.1 | Ti:0.01, Nb:0.02 | REM:0.003 | 1.8 | 0.0011 | 0.0011 | 1.64 |
| 3-R | 0.12 | 0.01 | 1.4 | 0.021 | 0.0020 | 1.6 | 0.0040 | - | - | - | 1.6 | 0.0010 | 0.0016 | 1.30 |
| 3-S | 0.07 | 0.30 | 1.2 | 0.010 | 0.0034 | 1.1 | 0.0035 | Cr:0.1 | Nb:0.01 | - | 1.4 | 0.0007 | 0.0029 | 0.91 |
| 3-T | 0.13 | 0.01 | 1.8 | 0.011 | 0.0009 | 1.5 | 0.0030 | - | Ti:0.03 | - | 1.5 | 0.0009 | 0.0019 | 1.57 |

(continued)

| Steel | Component of steel (% by mass) | | | | | | | | | | Al + Si (mass%) | 0.0006Al (mass%) | 0.0058-0.0026Al (mass%) | $1.25C^{0.5}$-0.57Si +0.625Mn (mass%) |
|---|---|---|---|---|---|---|---|---|---|---|---|---|---|---|
| | C | Si | Mn | P | S | Al | N | Mo,V, Cr | Ti, Nb, B, Ni | Ca, REM | | | | |
| 3-U | 0.04 | 0.20 | 1.80 | 0.012 | 0.0042 | 1.4 | 0.0037 | - | Ti:0.02, Nb:0.03 | - | 1.6 | 0.0008 | 0.0022 | 1.26 |
| 3-V | 0.09 | 0.02 | 0.70 | 0.010 | 0.0025 | 1.0 | 0.0029 | Mo:0.3 | Ti:0.01 | Ca:0.002 | 1.0 | 0.0006 | 0.0032 | 0.80 |
| 3-W | 0.12 | 0.10 | 3.50 | 0.011 | 0.0023 | 1.2 | 0.0018 | Cr:0.3 | - | - | 1.3 | 0.0007 | 0.0027 | 2.56 |
| 3-X | 0.10 | 0.10 | 1.80 | 0.010 | 0.002 | 0.4 | 0.0032 | - | - | - | 0.5 | 0.0002 | 0.0048 | 1.46 |

Underline: out of the range of the present invention.

Table 6-1 Reference Examples 3-5 and 3-8 to 3-19 (not in accordance with the invention)

| | Steel | Cracking in slab | Scrab of hot-rolled steel sheet | Alloyed hot-dip galvanized steel sheet | | | | | | | | | | | Anti-secondary work embrittle-ment*2 |
|---|---|---|---|---|---|---|---|---|---|---|---|---|---|---|---|
| | | | | Production condition | | | | | Residual γ (%) | Surface ap-pearance*1 | Mechanical properties | | | | |
| | | | | Annealing temp. (°C) | Cooling rate (°C/s) | Holding temp. (°C) | Holding time (s) | Alloying temp. (°C) | | | TS (MPa) | El (%) | TS×El (MPa%) | | |
| example 3-5 | 3-B | No | No | 800 | 33 | 400 | 110 | 510 | 10.9 | ○ | 955 | 23.9 | 22823 | | ⊙ |
| example 3-8 | 3-E | No | No | 810 | 27 | 420 | 90 | 480 | 9.2 | ○ | 817 | 24.6 | 20110 | | ⊙ |
| example 3-9 | 3-E | No | No | 700 | 22 | 460 | 100 | 530 | 0.6 | ○ | 643 | 25.1 | 16139 | | ⊙ |
| example 3-10 | 3-E | No | No | 820 | 28 | 430 | 20 | 540 | 1.9 | ○ | 824 | 21.3 | 17551 | | ⊙ |
| example 3-11 | 3-F | No | No | 810 | 43 | 370 | 220 | 510 | 9.1 | ○ | 786 | 27.3 | 21447 | | ⊙ |
| example 3-12 | 3-G | No | No | 810 | 50 | 510 | 115 | 520 | 11.8 | ○ | 886 | 25.9 | 22959 | | ⊙ |
| example 3-13 | 3-G | No | No | 800 | 2 | 410 | 105 | 520 | 2.6 | ○ | 625 | 25.9 | 16188 | | ⊙ |
| example 3-14 | 3-G | No | No | 790 | 32 | 280 | 120 | 530 | 2 | ○ | 837 | 18.8 | 15738 | | ⊙ |
| example 3-15 | 3-H | No | No | 850 | 16 | 420 | 80 | 520 | 10.4 | ○ | 846 | 25.6 | 21649 | | ⊙ |
| example 3-16 | 3-I | No | No | 820 | 27 | 460 | 90 | 540 | 7.3 | ○ | 879 | 22.8 | 20050 | | ⊙ |
| example 3-17 | 3-J | No | No | 810 | 44 | 390 | 150 | 500 | 8.7 | ○ | 707 | 28.3 | 20008 | | ⊙ |
| example 3-18 | 3-K | No | No | 790 | 31 | 500 | 100 | 490 | 10.9 | ○ | 996 | 22.1 | 22004 | | ⊙ |

EP 1 867 746 B1

| | Steel | Cracking in slab | Scrab of hot-rolled steel sheet | Alloyed hot-dip galvanized steel sheet | | | | | | | | | | | |
|---|---|---|---|---|---|---|---|---|---|---|---|---|---|---|---|
| | | | | Production condition | | | | | Residual $\gamma$ (%) | Surface appearance[*1] | Mechanical properties | | | Anti-secondary work embrittlement[*2] |
| | | | | Annealing temp. (°C) | Cooling rate (°C/s) | Holding temp. (°C) | Holding time (s) | Alloying temp. (°C) | | | TS (MPa) | El (%) | TS×El (MPa%) | |
| example 3-19 | 3-L | No | No | 820 | 22 | 640 | 90 | 520 | 1.4 | ○ | 903 | 19.4 | 17518 | ⊙ |

*1: ○ indicates a galvanized steel sheet with good surface appearance, and × indicates a galvanized steel sheet with poor surface appearance.
*2: ⊙ incidates a longitudinal crack transition temperature of less than -70°C, ○ incidates a longitudinal crack transition temperature of -70 to -40°C, and × incidates a longitudinal crack transition temperature of over -40°C.

EP 1 867 746 B1

Table 6-2

| | Steel | Cracking in slab | Scrab of hot-rolled steel sheet | Alloyed hot-dip galvanized steel sheet | | | | | | | | | | |
| | | | | Production condition | | | | | Residual γ (%) | Surface appearance*1 | Mechanical properties | | | Anti-secondary work embrittlement*2 |
| | | | | Annealing temp. (°C) | Cooling rate (°C/s) | Holding temp. (°C) | Holding time (s) | Alloying temp. (°G) | | | TS (MPa) | El (%) | TS×El (MPa%) | |
| Comparative exmaple 3-1 | 3-A | No | No | 820 | 25 | 430 | 85 | 520 | 10.2 | ○ | 617 | 35.1 | 21646 | × |
| Comparative exmaple 3-2 | 3-A | No | No | 840 | 31 | 470 | 90 | 610 | 2.4 | ○ | 599 | 127.9 | 15712 | × |
| Comparative exmaple 3-3 | 3-A | No | No | 920 | 18 | 440 | 90 | 530 | 8.1 | ○ | 572 | 30.3 | 17332 | × |
| Comparative exmaple 3-4 | 3-A | No | No | 830 | 150 | 460 | 105 | 520 | 7.8 | ○ | 654 | 28.2 | 18443 | × |
| Comparative exmaple 3-6 | 3-C | No | No | 840 | 26 | 480 | 160 | 510 | 12.3 | ○ | 1002 | 20.8 | 20850 | × |
| Comparative exmaple 3-7 | 3-D | No | No | 820 | 8 | 520 | 75 | 550 | 3.2 | ○ | 390 | 50.3 | 19632 | × |
| Comparative exmaple 3-20 | 3-M | Present | No | 800 | 35 | 410 | 180 | 520 | 6.2 | × | 738 | 26.6 | 19631 | × |
| Comparative exmaple 3-21 | 3-M | Present | No | 820 | 47 | 410 | 130 | 520 | 15.3 | × | 844 | 27.5 | 23198 | × |
| Comparative exmaple 3-22 | 3-N | Present | No | 780 | 28 | 460 | 125 | 530 | 9.6 | × | 810 | 25.0 | 20247 | × |
| Comparative exmaple 3-23 | 3-O | Present | No | 820 | 41 | 370 | 110 | 540 | 7.8 | × | 768 | 25.6 | 19662 | ⊙ |
| Comparative exmaple 3-24 | 3-P | Present | No | 820 | 9 | 530 | 80 | 510 | 10.3 | × | 691 | 31.1 | 21484 | × |
| Comparative example 3-25 | 3-Q | Present | Preesnt | 840 | 36 | 420 | 130 | 500 | 12.0 | × | 822 | 28.2 | 23193 | × |
| Comparative exmaple 3-26 | 3-R | Present | Preesnt | 800 | 12 | 400 | 85 | 530 | 9.7 | × | 542 | 41.3 | 22394 | × |

(continued)

| | Steel | Cracking in slab | Scrab of hot-rolled steel sheet | Alloyed hot-dip galvanized steel sheet | | | | | | | | | | | Anti-secondary work embrittle-ment[2] |
|---|---|---|---|---|---|---|---|---|---|---|---|---|---|---|---|
| | | | | Production condition | | | | | Residual $\gamma$ (%) | Surface appearance[1] | Mechanical properties | | | | |
| | | | | Annealing temp. (°C) | Cooling rate (°C/s) | Holding temp. (°C) | Holding time (s) | Alloying temp. (°G) | | | TS (MPa) | El (%) | TS×El (MPa%) | | |
| Comparative exmaple 3-27 | 3-S | No | Preesnt | 780 | 24 | 490 | 100 | 490 | 8.3 | ✕ | 500 | 43.6 | 21809 | | ✕ |
| Comparative exmaple 3-28 | 3-T | Present | No | 830 | 39 | 430 | 90 | 510 | 10.6 | ✕ | 714 | 30.8 | 21990 | | ✕ |
| Comparative exmaple 3-29 | 3-U | Present | Preesnt | 810 | 21 | 510 | 75 | 520 | 0.5 | ✕ | 510 | 26.7 | 13617 | | ✕ |
| Comparative exmaple 3-30 | 3-V | No | Preesnt | 830 | 27 | 410 | 75 | 550 | 1.6 | ✕ | 404 | 39.7 | 16039 | | ⊙ |
| Comparative exmaple 3-31 | 3-W | No | No | 820 | 15 | 430 | 90 | 510 | 13.1 | ○ | 1323 | 8.1 | 10716 | | ⊙ |
| Comparative exmaple 3-32 | 3-X | No | No | 820 | 48 | 420 | 120 | 520 | 2.3 | ○ | 538 | 23.6 | 12697 | | ⊙ |

Underline: out of the range of the present invention.

*1: O indicates a galvanized steel sheet with good surface appearance, and ✕ indicates a galvanized steel sheet with poor surface appearance.

*2: ⊙ incidates a longitudinal crack transition temperature of less than -70°C, O incidates a longitudinal crack transition temperature of -70 to -40°C, and ✕ incidates a longitudinal crack transition temperature of over -40°C.

Industrial Applicability

According to the present invention, an alloyed hot-dip galvanized steel sheet causing no cracking in a slab in continuous casting, no scab in hot rolling, and no plating defect after hot-dip galvanizing and thus having excellent surface appearance can be obtained without passing through a complicated process. In addition, the alloyed hot-dip galvanized steel sheet has both excellent anti-secondary work embrittlement and high strength, and is thus suitable as an automobile steel sheet and can widely contribute to the industrial field.

**Claims**

1. A method of producing an alloyed hot-dip galvanized steel sheet, the method comprising casting, hot-rolling, and cold-rolling steel for a steel sheet holding the steel sheet in a continuous galvanizing line, at 730°C to 900°C for 60 to 300 seconds, cooling the steel sheet at 3 to 100°C/s, further holding the steel sheet at 350°C to 600°C for 30 to 250 seconds, hot-dip galvanizing the steel sheet, and then alloying the steel sheet at 470°C to 600°C, wherein the steel sheet has a composition consisting of 0.05 to 0.25 wt% of C, 0.01 to 0.5 wt% of Si, 1 to 3 wt% of Mn, 0.001 to 0.1 wt% of P, 0.0001 to 0.01 wt% of S, 0.1 to 2 wt% of A1, less than 0.005 wt% of N, and optionally at least one element selected from the group consisting of 1 wt% or less of Cr, 1 wt% or less of V, and 1 wt% or less of Mo; optionally at least one element selected from the group consisting of 0.1 wt% or less of Ti, 0.1 wt% or less of Nb, 0.005 wt% or less of B, and 1 wt% or less of Ni; and optionally at least one element selected from the group consisting of Ca and REM in a total of 0.01 wt% or less, and satisfying the relations, Si + A1 $\geq$ 0.6 wt%, (0.0006 x Al) wt% $\leq$ N $\leq$ (0.0058 - 0.0026 x Al) wt%, and Al $\leq$ (1.25 $\times$ C$^{0.5}$ - 0.57 x Si + 0.625 x Mn) wt%, the balance being Fe and inevitable impurities, and wherein the steel sheet has a metal structure containing a residual austenite phase at a volume ratio of 3 to 20 %.

2. The method according to claim 1, wherein the composition contains at least one element selected from the group consisting of 0.01 to 1 wt% of Cr, 0.01 to 1 wt% of V, and 0.01 to 1 wt% of Mo.

3. The method according to claim 1, wherein the composition contains at least one element selected from the group consisting of 0.01 to 0.1 wt% of Ti, 0.01 to 0.1 wt% of Nb, 0.0001 to 0.005 wt% of B, and 0.01 to 1 wt% of Ni.

4. The method according to claim 2, wherein the composition contains at least one element selected from the group consisting of 0.01 to 0.1 wt% of Ti, 0.01 to 0.1 wt% of Nb, 0.0001 to 0.005 wt% of B, and 0.01 to 1 wt% of Ni.

5. The method according to claim 1, wherein the composition contains at least one element selected from the group consisting of Ca and REM in a total of 0.001 to 0.01 wt%.

6. The method according to claim 2, wherein the composition contains at least one element selected from the group consisting of Ca and REM in a total of 0.001 to 0.01 wt%.

7. The method according to claim 3, wherein the composition contains at least one element selected from the group consisting of Ca and REM in a total of 0.001 to 0.01 wt%.

8. The method according to claim 4, wherein the composition contains at least one element selected from the group consisting of Ca and REM in a total of 0.001 to 0.01 wt%.

**Patentansprüche**

1. Verfahren zur Herstellung eines legierten feuerverzinkten Stahlblechs, wobei das Verfahren Gießen, Warmwalzen und Kaltwalzen von Stahl für ein Stahlblech, Halten des Stahlblechs in einer kontinuierlichen Feuerverzinkungsstraße bei 730°C bis 900°C für 60 bis 300 Sekunden, Kühlen des Stahlblechs mit 3 bis 100°C/s, weiteres Halten des Stahlblechs bei 350°C bis 600°C für 30 bis 250 Sekunden, Feuerverzinken des Stahlblechs und anschließend Legieren des Stahlblechs bei 470°C bis 600°C umfasst, wobei das Stahlblech eine Zusammensetzung aufweist, die aus 0,05 bis 0,25 Gew.-% C, 0,01 bis 0,5 Gew.-% Si, 1 bis 3 Gew.-% Mn, 0,001 bis 0,1 Gew.-% P, 0,0001 bis 0,01 Gew.-% S, 0,1 bis 2 Gew.-% Al, weniger als 0,005 Gew.-% N, und optional zumindest einem Element ausgewählt aus der Gruppe bestehend aus 1 Gew.-% oder weniger Cr, 1 Gew.-% oder weniger V und 1 Gew.-% oder weniger Mo, optional zumindest einem Element ausgewählt aus der Gruppe bestehend aus 0,1 Gew.-% oder weniger Ti, 0,1 Gew.-% oder weniger Nb, 0,005 Gew.-% oder weniger B und 1 Gew.-% oder weniger Ni, und optional zumindest einem Element ausgewählt aus der Gruppe bestehend aus Ca und REM in einer Gesamtmenge von 0,01 Gew.-% oder weniger und als Rest aus Fe und unvermeidbaren Verunreinigungen besteht, wobei die Bedingungen $Si + Al \geq 0,6$ Gew.-%,

$(0,0006 \times Al)$ Ges.-% $\leq N \leq (0,0058 - 0,0026 \times Al)$ Gew.-%, und $Al \leq (1,25 \times C^{0,5} - 0,57 \times Si + 0,625 \times Mn)$ Gew.-% erfüllt werden, und wobei das Stahlblech ein Metallgefüge aufweist, das eine Restaustenitphase mit einem Volumenanteil von 3 bis 20% enthält.

2. Verfahren gemäß Anspruch 1, wobei die Zusammensetzung zumindest ein Element ausgewählt aus der Gruppe bestehend aus 0,01 bis 1 Gew.-% Cr, 0,01 bis 1 Gew.-% V und 0,01 bis 1 Gew.-% Mo enthält.

3. Verfahren gemäß Anspruch 1, wobei die Zusammensetzung zumindest ein Element ausgewählt aus der Gruppe bestehend aus 0,01 bis 0,1 Gew.-% Ti, 0,01 bis 0,1 Gew.-% Nb, 0,0001 bis 0,005 Gew.-% B und 0,01 bis 1 Gew.-% Ni enthält.

4. Verfahren gemäß Anspruch 2, wobei die Zusammensetzung zumindest ein Element ausgewählt aus der Gruppe bestehend aus 0,01 bis 0,1 Gew.-% Ti, 0,01 bis 0,1 Gew.-% Nb, 0,0001 bis 0,005 Gew.-% B und 0,01 bis 1 Gew.-% Ni enthält.

5. Verfahren gemäß Anspruch 1, wobei die Zusammensetzung zumindest ein Element ausgewählt aus der Gruppe bestehend aus Ca und REM in einer Gesamtmenge von 0,001 bis 0,01 Gew.-% enthält.

6. Verfahren gemäß Anspruch 2, wobei die Zusammensetzung zumindest ein Element ausgewählt aus der Gruppe bestehend aus Ca und REM in einer Gesamtmenge von 0,001 bis 0,01 Gew.-% enthält.

7. Verfahren gemäß Anspruch 3, wobei die Zusammensetzung zumindest ein Element ausgewählt aus der Gruppe bestehend aus Ca und REM in einer Gesamtmenge von 0,001 bis 0,01 Gew.-% enthält.

8. Verfahren gemäß Anspruch 4, wobei die Zusammensetzung zumindest ein Element ausgewählt aus der Gruppe bestehend aus Ca und REM in einer Gesamtmenge von 0,001 bis 0,01 Gew.-% enthält.

## Revendications

1. Procédé de production d'une tôle d'acier allié galvanisé à chaud, le procédé comprenant un coulage, un laminage à chaud, et un laminage à froid d'acier pour tôle d'acier, un maintien de la tôle d'acier dans une chaîne de galvanisation en continu entre 730 °C et 900 °C pendant 60 à 300 secondes, un refroidissement de la tôle d'acier de 3 à 100 °C/s, un maintien supplémentaire de la tôle d'acier entre 350 °C et 600 °C pendant 30 à 250 secondes, une galvanisation à chaud de la tôle d'acier, et ensuite un alliage de la tôle d'acier entre 470 °C et 600 °C, dans lequel la tôle d'acier présente une composition constituée de 0,05 à 0,25 % en poids de C, de 0,01 à 0,5 % en poids de Si, de 1 à 3 % en poids de Mn, de 0,001 à 0,1 % en poids de P, de 0,0001 à 0,01 % en poids de S, de 0,1 à 2 % en poids de Al, de moins de 0,005 % en poids de N, et optionnellement d'au moins un élément choisi dans le groupe constitué de 1% en poids ou moins de Cr, de 1% en poids ou moins de V, et de 1 % en poids ou moins de Mo; optionnellement d'au moins un élément choisi dans le groupe constitué de 0,1 % en poids ou moins de Ti, de 0,1% en poids ou moins de Nb, de 0,005% en poids ou moins de B, et de 1 % en poids ou moins de Ni ; et optionnellement d'au moins un élément choisi dans le groupe constitué de Ca et REM (métal de terres rares) pour un total de 0,01% en poids ou moins, et satisfaisant aux relations, $Si + Al \geq 0,6$ % en poids, $(0,0006 \times Al)$ % en poids $\leq N \leq (0,0058 - 0,0026 \times Al)$ % en poids, et $Al \leq (1,25 \times C^{0,5} - 0,57 \times Si + 0,625 \times Mn)$ % en poids, le reste étant du Fe et d'inévitables impuretés, et dans lequel la tôle d'acier présente une structure métallique contenant une phase austénite résiduelle à un rapport volumique de 3 à 20 %.

2. Procédé selon la revendication 1, dans lequel la composition contient au moins un élément choisi dans le groupe constitué de 0,01 à 1 % en poids de Cr, de 0,01 à 1 % en poids de V, et de 0,01 à 1 % en poids de Mo.

3. Procédé selon la revendication 1, dans lequel la composition contient au moins un élément choisi dans le groupe constitué de 0,01 à 0,1% en poids de Ti, de 0,01 à 0,1 % en poids de Nb, de 0,0001 à 0,005 % en poids de B, et de 0,01 à 1 % en poids de Ni.

**4.** Procédé selon la revendication 2, dans lequel la composition contient au moins un élément choisi dans le groupe constitué de 0,01 à 0,1% en poids de Ti, de 0,01 à 0,1 % en poids de Nb, de 0,0001 à 0,005 % en poids de B, et de 0,01 à 1 % en poids de Ni.

**5.** Procédé selon la revendication 1, dans lequel la composition contient au moins un élément choisi dans le groupe constitué de Ca et d'au moins un REM pour un total de 0,001 à 0,01% en poids.

**6.** Procédé selon la revendication 2, dans lequel la composition contient au moins un élément choisi dans le groupe constitué de Ca et d'au moins un REM pour un total de 0,001 à 0,01 % en poids.

**7.** Procédé selon la revendication 3, dans lequel la composition contient au moins un élément choisi dans le groupe constitué de Ca et d'au moins un REM pour un total de 0,001 à 0,01% en poids.

**8.** Procédé selon la revendication 4, dans lequel la composition contient au moins un élément choisi dans le groupe constitué de Ca et d'au moins un REM pour un total de 0,001 à 0,01 % en poids.

## REFERENCES CITED IN THE DESCRIPTION

**Patent documents cited in the description**

- JP 11279691 A
- JP 2002030403 A
- WO 3596316 A
- JP 2004211140 A
- JP 2002047535 A
- JP 2000345288 A
- JP 2003049239 A
- JP 2003105491 A
- JP 2004115843 A
- JP 2002038248 A
- JP H11131145 A
- JP 2003105486 A
- JP 2001303226 A
- JP H05247586 A
- JP H06145788 B